# EUROPÄISCHE PATENTANMELDUNG

(11) **EP 4 104 675 A1**
(43) Veröffentlichungstag der Anmeldung: **21.12.2022**
(21) Anmeldenummer: 22173804.0
(22) Anmeldetag: 17.05.2022
(51) Int. Cl.: A01K 1/01

(54) **TOILETTENBOX FÜR KLEINTIERE**

(30) Priorität: 16.06.2021 DE 202021103250 U
(71) Anmelder: Rotho Kunststoff AG, 5303 Würenlingen (CH)
(72) Erfinder: Brunner, Markus, 5613 Hilfikon (CH); Thoma, Christian, 79774 Abbruck (DE); Binder, Marc, 5333 Baldingen (CH)
(74) Vertreter: LBP Lemcke, Brommer & Partner Patentanwälte mbB

(57) **Zusammenfassung**

Die Erfindung betrifft eine Toilettenbox für Kleintiere, insbesondere Katzen, mit einer Wanne 5 und einer auf die Wanne 5 aufsetzbaren Haube 1, die zusammen mit der Wanne 5 einen Innenraum 27 einschließt, mit einer Zugangsöffnung 7 zum Innenraum 27 in einer Seitenwandung 3 der Haube 1 und mit einer Schwingtüre 8 zum Abdecken oder Verschließen der Zugangsöffnung 7, die mittels Scharnierelementen schwenkbar im Bereich eines oberen Randes einer Oberseite 9 der Zugangsöffnung 7 angebracht ist und um eine im Wesentlichen horizontal verlaufende Schwenkachse 26 nach innen zum Innenraum 27 und nach außen schwingen kann. Sowohl die Wanne 5 als auch die Haube 1 sind aus spritzgegossenem Kunststoff gefertigt, wobei in einem von der Schwenkachse 26 beabstandeten Bereich der Schwingtüre 8 mindestens ein erstes magnetisches Element 28 an der Schwingtüre 8 befestigt und/oder in diese integriert ist, während an der Haube 1 und/oder an der Wanne 5, in einem Randbereich um die Zugangsöffnung 7, mindestens ein zweites magnetisches Element 29 so angeordnet ist, dass die ersten und zweiten magnetischen Elemente 28, 29 über ein magnetisches Feld miteinander wechselwirken und sich hierbei gegenseitig anziehen.

## Beschreibung

Die Erfindung betrifft eine Toilettenbox für Kleintiere, insbesondere Katzen, nach dem Oberbegriff des Anspruchs 1. Diese Toilettenbox besteht im Wesentlichen aus einer Wanne und einer auf die Wanne aufsetzbaren Haube, die zusammen mit der Wanne einen Innenraum einschließt. In einer Seitenwandung der Haube, insbesondere einer Stirnseite, befindet sich eine Zugangsöffnung zum Innenraum, die mit einer Schwingtüre zum Abdecken oder Verschließen der Zugangsöffnung versehen ist. Eine solche Schwingtüre, auch Pendeltüre genannt, ist mittels Scharnierelementen schwenkbar an der Zugangsöffnung angebracht, vorliegend im Bereich einer Oberseite der Zugangsöffnung, und kann um eine Schwenkachse nach Innen zum Innenraum und nach außen von der Haube weg schwingen, vorliegend um eine im Wesentlichen horizontal verlaufende Schwenkachse. So kann das Kleintier zur Benutzung der Toilettenbox durch die Zugangsöffnung in den Innenraum gelangen, indem es die Schwingtüre beim Hineingehen nach innen verschwenkt, und es kann ebenso leicht wieder aus der Toilettenbox herauskommen, indem es die Schwingtüre beim Durchtritt durch die Zugangsöffnung nach außen verschwenkt.

Sowohl die Wanne als auch die Haube der Toilettenbox sind aus spritzgegossenem Kunststoff gefertigt. Dies ermöglicht nicht nur eine kostengünstige Herstellung sowie einen sehr leichtgewichtigen und somit leicht transportablen, aber dennoch eigenstabilen Aufbau, sondern bietet auch besonders hygienische und leicht zu reinigende Oberflächen, was bei dem vorliegenden Verwendungszweck von großem Vorteil ist.

Die Schwingtüre, die selbst nicht aus spritzgegossenem Kunststoff bestehen muss, vorzugsweise jedoch ebenfalls aus diesem Material gefertigt ist, bietet die größten Herausforderungen bei der Konstruktion einer Toilettenbox der vorliegenden Art. Denn die Schwingtüre soll dem Kleintier, das die Toilettenbox nutzt, insbesondere einer Katze, einen sehr einfachen und niederschwelligen Zugang gestatten. Hierfür muss die Schwingtüre leichtgängig in beide Richtungen verschwenkbar sein. Gleichzeitig soll die Schwingtüre in ihrer verschlossenen Stellung, in die sie selbsttätig zurückkehren soll, den Innenraum möglichst vollständig blickdicht und, soweit möglich, geruchsdicht verschließen. Diese beiden gewünschten Eigenschaften der Schwingtüre erzeugen jedoch einen Zielkonflikt.

Bei Toilettenboxen aus spritzgegossenem Kunststoff kommt hinzu, dass die Seitenwandungen der Haube, wegen des im Herstellungsprozess notwendigen Entformens der frisch spritzgegossenen Haube aus dem Spritzgießwerkzeug, leicht konisch verlaufen, wodurch die Zugangsöffnung nicht exakt in einer vertikalen Ebene liegt, sondern gegen die Vertikale verkippt ist. Eine Schwingtüre, die schwenkbar im Bereich der Oberseite der Zugangsöffnung angebracht ist, wird aufgrund der Schwerkraft jedoch senkrecht nach unten hängen, so dass sie die Zugangsöffnung in der leicht konisch verlaufenden Seitenwandung der Haube in dieser Stellung nicht exakt verschließt.

Der Erfindung liegt daher die Aufgabe zugrunde, eine Toilettenbox für Kleintiere der eingangs genannten Art hinsichtlich des beschriebenen Zielkonflikts für die Eigenschaften der Schwingtüre zu verbessern und insbesondere das Verschließen der Zugangsöffnung mittels der Schwingtüre zu optimieren.

Gelöst ist diese Aufgabe durch eine Toilettenbox mit den Merkmalen des Anspruchs 1. Vorteilhafte Ausgestaltungen und Weiterbildungen der erfindungsgemäßen Toilettenbox finden sich in den Ansprüchen 2 bis 14.

Die vorliegende Toilettenbox für Kleintiere, mit einer Wanne und einer auf die Wanne aufsetzbaren Haube, die zusammen mit der Wanne einen Innenraum einschließt, mit einer Zugangsöffnung zum Innenraum in einer Seitenwandung der Haube und mit einer Schwingtüre zum Abdecken oder Verschließen der Zugangsöffnung, die mittels Scharnierelementen schwenkbar im Bereich einer Oberseite der Zugangsöffnung angebracht ist und um eine im Wesentlichen horizontal verlaufende Schwenkachse nach innen zum Innenraum und nach außen schwingen kann, bei welcher sowohl die Wanne als auch die Haube aus spritzgegossenem Kunststoff gefertigt sind, zeichnet sich erfindungsgemäß also dadurch aus, dass in einem von der Schwenkachse beabstandeten Bereich der Schwingtüre mindestens ein erstes magnetisches Element an der Schwingtüre befestigt und/oder in diese integriert ist, während an der Haube und/oder an der Wanne, in einem Randbereich um die Zugangsöffnung, mindestens ein zweites magnetisches Element so angeordnet ist, dass die ersten und zweiten magnetischen Elemente über ein magnetisches Feld miteinander wechselwirken und sich hierbei gegenseitig anziehen.

Die beiden magnetischen Elemente wechselwirken hierbei so, dass ihre Anziehungskraft die Schwingtüre möglichst exakt in der gewünschten Stellung hält, in der die Schwingtüre die Zugangsöffnung optimal verschließt. Gleichwohl kann die Anziehungskraft der beiden magnetischen Elemente vom Kleintier, das die Toilettenbox benutzt, sehr leicht überwunden werden, um die Schwingtüre zu öffnen und die Zugangsöffnung freizugeben.

Optimal ist es hierbei, wenn die Schwingtüre ebenfalls aus spritzgegossenem Kunststoff gefertigt ist und ein entsprechend geringes Gewicht aufweist. Dies ermöglicht, die magnetische Anziehung zwischen den beiden magnetischen Elementen so auszulegen, dass es nur sehr geringer Kräfte bedarf, die Schwingtüre gegen die magnetische Anziehungskraft zu öffnen, während die magnetische Anziehungskraft gleichwohl ausreicht, die Schwingtüre in ihrer gewünschten Position innerhalb der Zugangsöffnung zu halten und hierbei gegebenenfalls in eine leicht gekippte Stellung zu bringen, die sie unter Einwirkung der Schwerkraft nicht einnehmen würde, in der sie dem konischen Verlauf der Seitenwandung der Haube jedoch folgt.

Vorzugsweise besteht mindestens eines der ersten und zweiten magnetischen Elemente aus mindestens einem Permanentmagneten, während diejenigen erfindungsgemäßen magnetischen Elemente, die gegebenenfalls keine Permanentmagnete sind, aus ferromagnetischem, ferrimagnetischem und/oder diamagnetischem Material bestehen.

Mindestens ein erstes magnetisches Element ist bevorzugt an einem Rand, vorzugsweise einem unteren Rand der Schwingtüre oder in der Nähe desselben angeordnet, während mindestens eines der zweiten magnetischen Elemente im Randbereich um die Zugangsöffnung so angeordnet ist, dass sich die ersten und zweiten magnetischen Elemente beim Durchschwingen der Schwingtüre in etwa gegenüberliegen. In der Regel werden nur jeweils ein erstes und zweites magnetisches Element verwendet werden. Durch diese Anordnung der ersten und zweiten magnetischen Elemente wird die Schwingtüre in ihrer gewünschten Ruhestellung innerhalb der Zugangsöffnung vom magnetischen Feld eingefangen, das sich zwischen den ersten und zweiten magnetischen Elementen ausbildet. Dies ist deswegen vorteilhaft, weil die Schwingtüre nach einem Hineingehen oder Herauskommen des Kleintiers unter Einwirkung der Schwerkraft mindestens einmal durch die gewünschte Schließstellung durchschwingt und somit leicht vom Magnetfeld eingefangen werden kann, während das Magnetfeld bei geöffneter Schwingtüre keine nennenswerte Anziehungskraft erzeugt.

Die erfindungsgemäßen magnetischen Elemente sind zumindest in der Haube oder Wanne bevorzugt in angespritzte Aufnahmen mit elastischen Rastelementen eingedrückt, wobei die Aufnahmen kronenförmig mit elastisch verformbaren, als Rastelemente dienenden Zacken oder Fingern ausgestaltet sein können. Da die magnetischen Elemente erst nach dem Spritzgießen der Haube oder Wanne und gegebenenfalls der Schwingtüre an diesen Bauteilen angebracht werden können, sind solche Aufnahmen, in welche die magnetischen Elemente leicht von Hand oder mit einem Manipulator eingedrückt werden können, besonders vorteilhaft. Eine kronenförmige Ausgestaltung der Aufnahmen stellt hierbei besonders zuverlässig sicher, dass die magnetischen Elemente sich nach dem Eindrücken nicht mehr unbeabsichtigt von der Haube oder gegebenenfalls der Schwingtüre lösen.

Zur Optimierung der erfindungsgemäßen Lösung des Problems, dass eine spritzgegossene Haube zwangsläufig leicht konische Seitenwände aufweist, während eine oben an der Zugangsöffnung angebrachte, um eine horizontal verlaufende Schwenkachse verschwenkbare Schwingtüre unter dem Einfluss der Schwerkraft vertikal nach unten hängt, ist es bevorzugt, wenn die Schwingtüre mit einer Gewichtsverteilung, insbesonderemit einer solcherart variierenden Materialverteilung gefertigt ist, dass sie aufgrund der Lage ihres Schwerpunkts in Bezug auf die Schwenkachse unter alleinigem Einfluss der Schwerkraft bereits eine Position einnimmt, in der ihr Rand dem um die Zugangsöffnung angeordneten Randbereich der Haube umlaufend gegenüberliegt. Die erfindungsgemäßen magnetischen Elemente müssen dann die Schwingtüre also nicht mehr einfangen, sondern dienen dann nur noch dazu, die Schwingtüre in ihrer gewünschten Ruheposition zu sichern.

Die Wanne der erfindungsgemäßen Toilettenbox ist bevorzugt mit einem außen umlaufenden Stellrand versehen, was der Toilettenbox zusätzliche Stabilität verleiht. Vorzugsweise ist die Haube hierbei vollständig, oder mit Ausnahme des Stellrandes nahezu vollständig über die Wanne überstülpbar. So ergibt sich eine Verbindung zwischen der Haube und der Wanne, die stabil genug ist um zu verhindern, dass sich die Haube von der Wanne löst, wenn ein Kleintier die Toilettenbox nutzt und hierbei zum Beispiel von innen gegen die Haube stößt. Gleichwohl ist die Haube leicht von der Wanne abzuheben.

Die Wanne weist an einer vorderen Stirnseite bevorzugt eine Absenkung als Teil der Zugangsöffnung auf. Dies ermöglicht, dass die Haube besonders weit über die Wanne stülpbar ist, mit den eben beschriebenen Vorteilen, die sich aus einem vergleichsweise festen Sitz der Haube auf der Wanne ergeben.

An einer hinteren Stirnseite der Wanne kann diese mit einer Ausnehmung zur formschlüssigen Aufnahme einer Schaufel für Katzenstreu und dergleichen verssehen sein, wobei die Ausnehmung vorzugsweise ein Rastelement zum Einrasten der Schaufel aufweist, und wobei die Schaufel mit ihrem Stiel nach oben über die Wanne überstehend in der Ausnehmung gehalten ist. Wenn man die Haube von der Wanne abnimmt, steht so eine Schaufel für Katzenstreu bereit, und zwar ergonomisch leicht am Stiel ergreifbar und gegen ein Hineinrutschen in die Wanne und deren Inhalt gesichert. Gleichzeitig hat die Schaufel ihren Ort innerhalb der Toilettenbox, was nicht zuletzt aus hygienischen Gründen vorteilhaft ist.

Die Haube der erfindungsgemäßen Toilettenbox kann weiterhin mit einer Entlüftungsöffnung versehen sein, in die ein Filterhalter mit einem wechselbaren Filtervlies, vorzugsweise aus oder mit Aktivkohle, lösbar eingeclipst ist. Diese Entlüftungsöffnung befindet sich bevorzugt in derjenigen Seitenwandung der Haube, die der Zugangsöffnung gegenüberliegt. Ein eingeclipster Filterhalter in der Entlüftungsöffnung ermöglicht eine besonders leichte Auswechslung des Filtervlieses und ist dennoch in der Lage, die Entlüftungsöffnung, zusammen mit dem Filtervlies, weitgehend geruchsdicht zu verschließen.

Hierzu besteht der Filterhalter vorzugsweise im Wesentlichen aus einem Rahmen mit Rastelementen zum Einclipsen in die Entlüftungsöffnung, einem vom Rahmen begrenzten Gitter sowie Haltekrallen für das wechselbare Filtervlies. Die Haltekrallen bilden vorzugsweise gleichzeitig die Rastelemente zum Einclipsen in die Entlüftungsöffnung.

Die Haube der erfindungsgemäßen Toilettenbox kann, bis auf einen Tragegriff, der zwei gegenüberliegende Seitenwandungen verbindet, oben offen ausgebildet sein, wobei sie bevorzugt mit einem Aufliegerahmen und/oder mit Aufliegevorsprüngen versehen ist, auf dem oder auf denen eine auswechselbare Deckplatte liegt oder befestigt, vorzugsweise lösbar befestigt ist. Die auswechselbare Deckplatte kann somit separat gefertigt, insbesondere spritzgegossen werden. Dies ermöglicht, für die Deckplatte ein anders Design, insbesondere eine andere Oberfläche oder eine andere Färbung, oder auch ein anderes Material zu verwenden, um entsprechende gestalterische Effekte zu erzielen. Darüber hinaus kann eine solche separate Deckplatte auch vom Benutzer noch ausgetauscht werden, um das Erscheinungsbild der erfindungsgemäßen Toilettenbox von Zeit zu Zeit zu ändern oder zu individualisieren.

Die Schwingtüre der erfindungsgemäßen Toilettenbox ist schließlich bevorzugt solcherart mit Scharnierelementen schwenkbar im Bereich der Oberseite der Zugangsöffnung angebracht, dass die Schwenkachse der Schwenktüre oberhalb des oberen Randes der Zugangsöffnung und zum Innenraum hin von der Seitenwandung der Haube beabstandet verläuft, wobei die Scharnierelemente aus mindestens zwei an die Seitenwandung der Haube angeformten Drehlagern und mindestens zwei an die Schwingtüre angeformten und in den Drehlagern schwenkbar gelagerten, vom Schwenklager bis zur Schwingtüre C-förmig verlaufenden Scharnierstreben gebildet sind. Diese Scharnierstreben ermöglichen, dass die Schwingtüre in ihrer maximal verschwenkten Position deutlich oberhalb des oberen Randes der Zugangsöffnung zu liegen kommt. Dies optimiert die Stapelbarkeit von mehreren Hauben von erfindungsgemäßen Toilettenboxen, da die Hauben weiter ineinander eintauchen können, als wenn die Schwingtüre mit ihrem oberen Rand im Wesentlichen am oberen Rand der Zugangsöffnung verbleibt, wenn sie nach innen verschwenkt ist.

Ein Ausführungsbeispiel für eine erfindungsgemäß ausgestaltete Toilettenbox für Kleintiere wird im Folgenden anhand der beigefügten Zeichnungen näher beschrieben und erläutert, wobei die konkret beschriebenen Merkmale nur beispielhaft die Ausführung der Erfindung illustrieren, jedoch gleichwohl erfindungswesentliche Merkmale enthalten können.

Es zeigen:
- Figur 1: eine perspektivische Ansicht eines Ausführungsbeispiels einer erfindungsgemäßen Toilettenbox von schräg vorne;
- Figur 2: eine Ansicht wie Figur 1, jedoch von schräg hinten;
- Figur 3: eine schematische Explosionsdarstellung der Toilettenbox aus den Figuren 1 und 2;
- Figur 4: eine schematische Schnittdarstellung eines Teils der Haube der Toilettenbox aus den vorhergehenden Figuren, mit Schwingtüre nach außen verschwenkt;
- Figur 5: eine Darstellung wie Figur 4, jedoch mit Schwingtüre nach innen verschwenkt;
- Figur 6: eine Schnittdarstellung von Haube und Schwingtüre, mit magnetischen Elementen;
- Figur 7: ein magnetisches Element in einer Aufnahme in der Schwingtüre;
- Figur 8: die Wanne der Toilettenbox aus den vorhergehenden Figuren, mit Schaufel;
- Figur 9: ein Filterhalter der Toilettenbox aus den vorhergehenden Figuren;
- Figur 10: der Filterhalter aus Figur 9, jedoch mit eingesetztem Filtervlies.

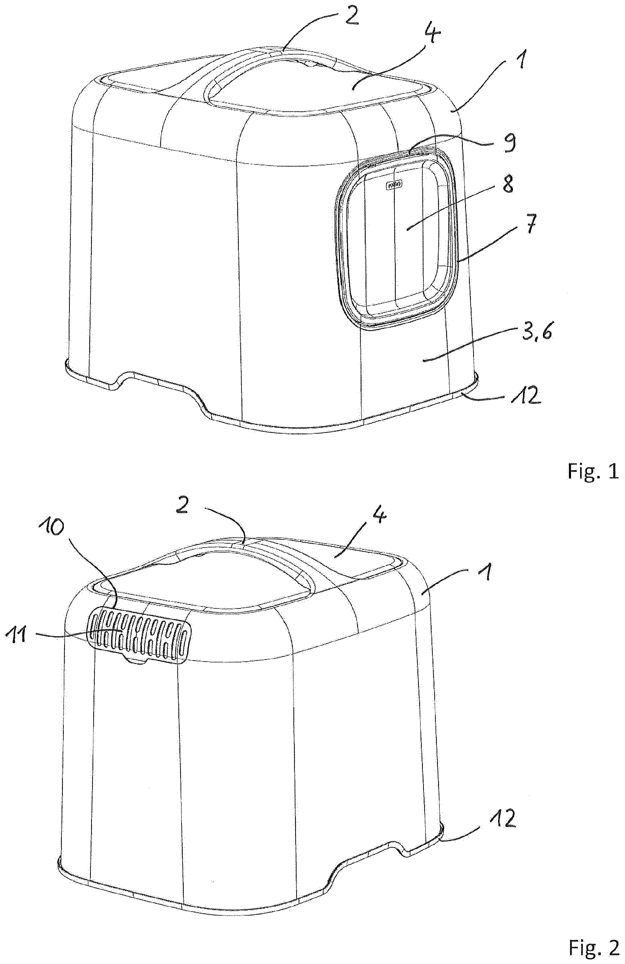

Die Figuren 1 und 2 zeigen das vorliegend beschriebenen Ausführungsbeispiel für eine erfindungsgemäß ausgestaltete Toilettenbox in zwei Ansichten von schräg vorne (Figur 1) bzw. schräg hinten (Figur 2).

In Figur 1 ist eine Haube 1 mit einem Tragegriff 2, der zwei gegenüberliegende Seitenwandungen 3 verbindet, und einer auswechselbaren Deckplatte 4 als Oberseite der Haube 1 zu sehen. Weil die Haube 1 nahezu komplett über eine Wanne 5, diese passend aufnehmend, übergestülpt ist, ist die Wanne 5 hier und in Figur 2 kaum zu sehen. Lediglich ein Stellrand 12 der Wanne 5 wird von der Haube 1 nicht überdeckt und ist in den Figuren 1 und 2 am unteren Rand der Haube 1 sichtbar.

In einer Seitenwandung 3, die eine Stirnseite 6 der Haube 1 bildet, ist eine Zugangsöffnung 7 zu erkennen, die von einer Schwingtüre 8 verschlossen ist. Die Schwingtüre 8 kann nach innen in die Haube 1 hinein sowie nach außen verschwenkt werden, und zwar um eine Schwenkachse 26, die im Wesentlichen horizontal orientiert ist und im Bereich einer Oberseite 9 der Zugangsöffnung 7 verläuft.

Wie Figur 2 verdeutlicht, weist die Haube 1 des vorliegenden Ausführungsbeispiels in ihrer der Zugangsöffnung 7 gegenüberliegenden Seitenwandung 3 eine Entlüftungsöffnung 10 auf, die einen Filterhalter 11 aufnimmt, welcher in die Entlüftungsöffnung 10 eingeclipst werden kann und ein wechselbares Filtervlies 15 (hier nicht sichtbar) hält.

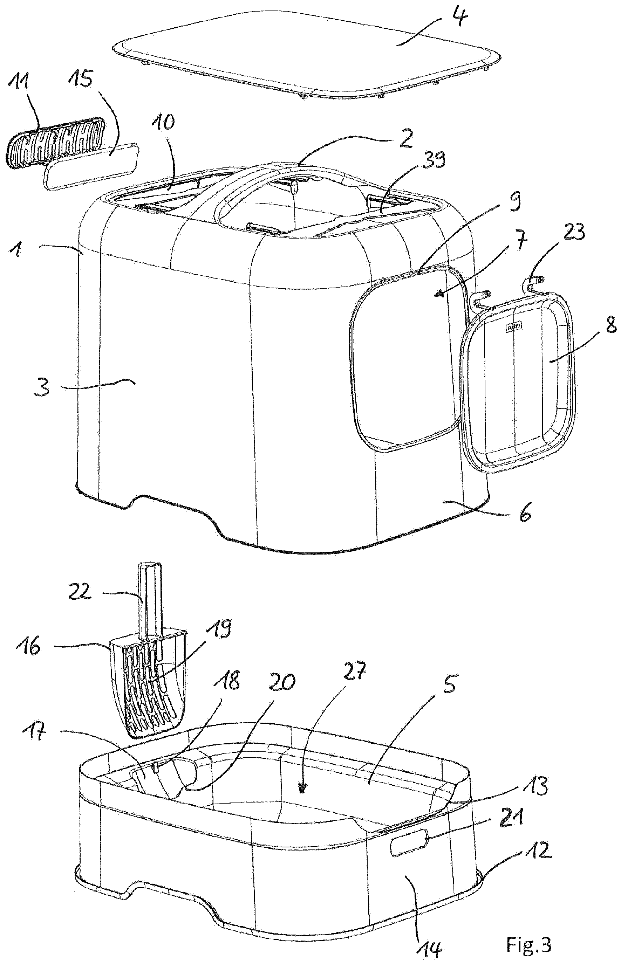

Figur 3 verdeutlicht in einer schematischen Explosionsdarstellung den grundlegenden Aufbau des vorliegenden Ausführungsbeispiels einer Toilettenbox für Kleintiere. Diese besteht aus wenigen, allesamt spritzgegossenen Kunststoffteilen, nämlich der Wanne 5 mit ihrem Stellrand 12 und einer Absenkung 13 an einer vorderen Stirnseite 14, die bei aufgesetzter Haube 1 einen Teil der Zugangsöffnung 7 bildet, der Haube 1 mit ihrer Zugangsöffnung 7 und ihrem Tragegriff 2, der Schwingtüre 8, dem Filterhalter 11 mit einem wechselbaren Filtervlies 15, sowie der Deckplatte 4, die zur Individualisierung ausgetauscht werden kann oder als optischer Akzent dient und aus einem anderen Material, andersfarbig und/oder mit einer anderen Oberfläche gefertigt sein kann.

Hier ist an der Oberseite der Haube 1 zu erkennen, dass die Haube 1 mit einem Aufliegerahmen 31 gefertigt wurde, auf den die Deckplatte 4 aufgelegt und dort verrastet werden kann.

Wie Figur 3 ebenfalls zeigt, umfasst das vorliegende Ausführungsbeispiel für eine Toilettenbox außerdem eine Schaufel 16 für Katzenstreu und dergleichen, die passend in eine Ausnehmung 17, die in die Wanne 5 eingeformt ist, eingesetzt werden kann, wobei sie dort formschlüssig gehalten wird.

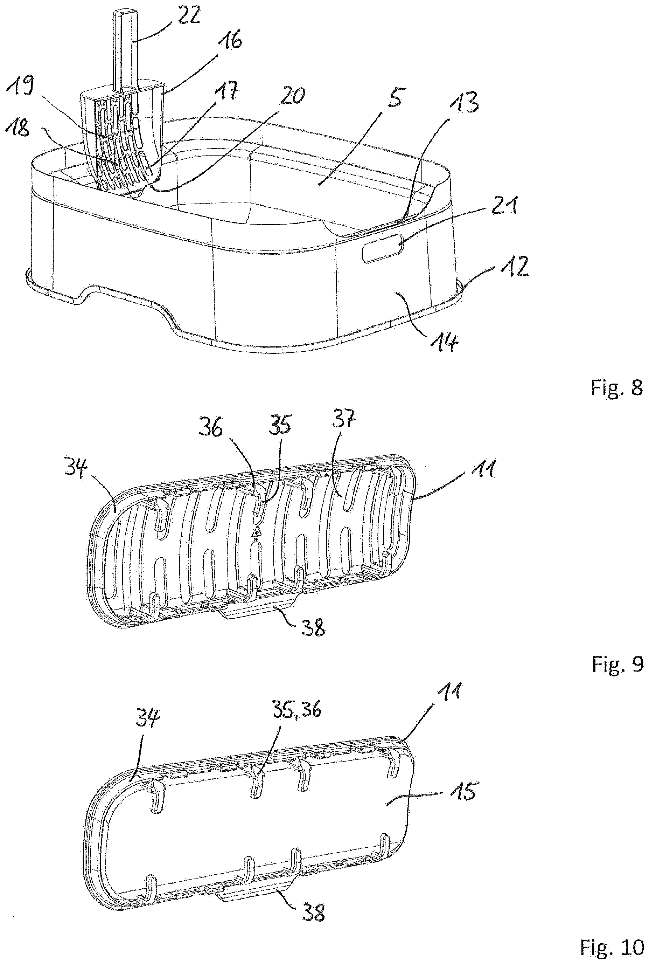

Dies ist in Figur 8 genauer dargestellt. Dort sitzt die Schaufel 16 formschlüssig in der Ausnehmung 17, wobei ein in die Wanne 5 eingeformter Haltestift 18 in eine Öffnung 19 im Boden der Schaufel 16 passend sitzt und die Schaufel 16 so, in Zusammenwirken mit zwei Haltevorsprüngen 20, formschlüssig in der Ausnehmung 17 hält. Auf diese Weise ist die Schaufel 16 sicher und hygienisch im Innenraum 27 der Toilettenbox an der Wanne 5 gehalten, und nach Abnehmen der Haube 1 ist die Schaufel 16, die mit ihrem Stiel 22 nach oben in der Ausnehmung 17 sitzt, ergonomisch optimal platziert, um sie ergreifen und benutzen zu können.

Wie Figur 8 außerdem zeigt, weist die Wanne 5 an ihrer vorderen Stirnseite 14 unterhalb der Absenkung 13 eine Grifföffnung 21 auf, mittels der die Wanne 5 leicht festgehalten und angehoben werden kann, beispielsweise um sie zu reinigen.

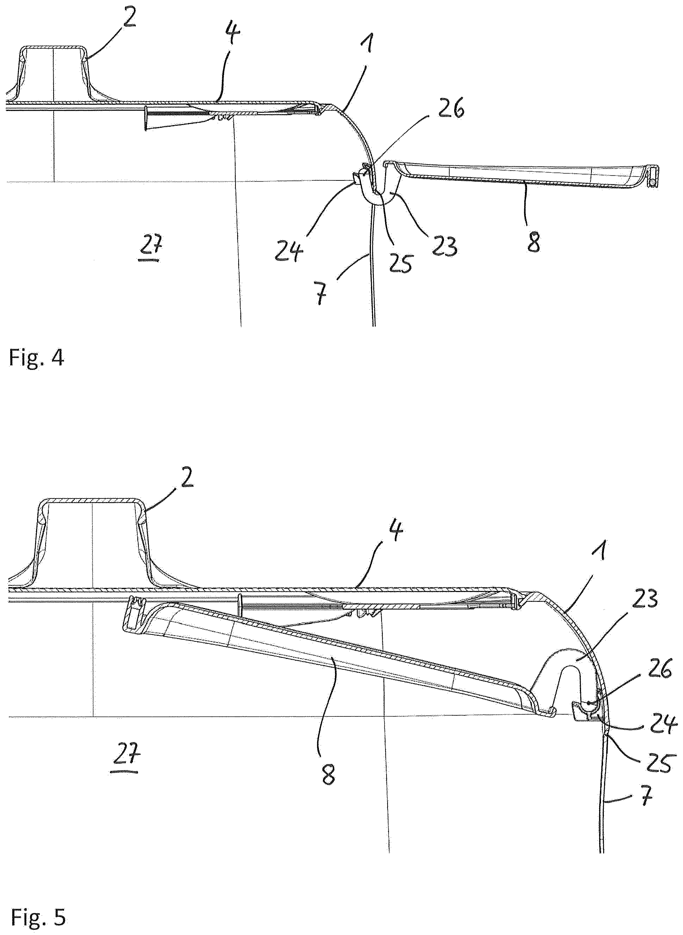

Die Figuren 4 und 5 verdeutlichen die schwenkbare Aufhängung der Schwingtüre 8 an der Haube 1 in seitlichen Schnittdarstellungen, wobei Figur 4 die Schwingtüre 8 in ihrer maximalen Auslenkung nach außen und die Figur 5 die Schwingtüre 8 in ihrer maximalen Auslenkung nach innen zeigt.

Hier wird deutlich, dass die Schwingtüre 8 an zwei Scharnierelementen schwenkbar befestigt ist, die aus C-förmig verlaufenden Scharnierstreben 23 und Drehlagern 24 gebildet sind, welche ihrerseits an einer Innenseite einer Seitenwandung 3 der Haube 1 angeformt sind, und zwar oberhalb eines oberen Randes 25 der Zugangsöffnung 7. Auf diese Weise verläuft eine Schwenkachse 26 horizontal sowie oberhalb des oberen Randes 25 der Zugangsöffnung 7, und sie ist zu einem Innenraum 27 der Toilettenbox hin von der Seitenwandung 3 bzw. der Stirnseite 6 der Haube 1 beabstandet. Hierdurch wird, wie Figur 5 verdeutlicht, ermöglicht, dass die Schwingtüre 8, wenn sie in den Innenraum 27 hinein verschwenkt ist, etwas oberhalb des oberen Randes 25 der Zugangsöffnung zu liegen kommt, was beim Stapeln von mehreren Hauben 1 ineinander Vorteile bietet.

Im Falle einer Öffnung der Schwingtüre 8 nach außen kann die Schwingtüre 8, wie in Figur 4 ersichtlich ist, ebenfalls so weit aufschwenken, dass sich die Schwingtüre oberhalb des oberen Randes 25 der Zugangsöffnung 7 befindet, so dass die Katze den gesamten lichten Raum der Zugangsöffnung 7 nutzen kann.

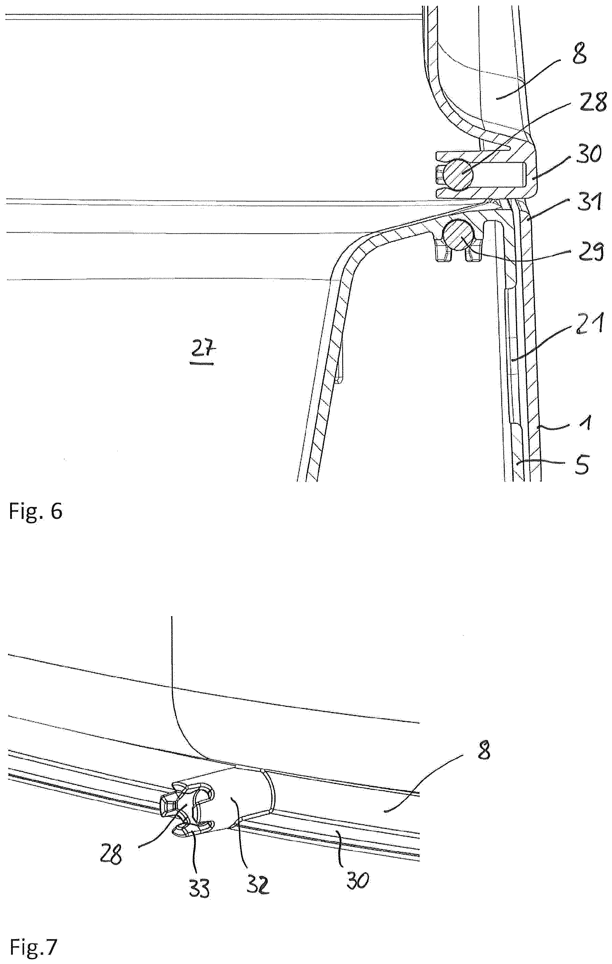

Figur 6 verdeutlicht, wie die erfindungsgemäßen magnetischen Elemente, die dafür sorgen, dass die Schwingtüre 8 in einer die Zugangsöffnung 7 möglichst dicht abdeckenden Sollstellung stehen bleibt, angeordnet werden können. Ein erstes magnetisches Element 28 sitzt in der Schwingtüre 8, und zwar in einem unteren Rand 30 derselben. Diesem ersten magnetischen Element 28 gegenüberliegend sitzt ein zweites magnetisches Element 29 in einem unteren Randbereich 31 der Zugangsöffnung 7. Das erste und das zweite magnetische Element 28, 29 liegen sich also beim Durchschwingen der Schwingtüre 8 recht exakt gegenüber. Da die Absenkung 13 der Wanne 5 vorliegend als Teil der Zugangsöffnung 7 dient bzw. bis an die Zugangsöffnung 7 der Haube 1 heranreicht, ist das zweite magnetische Element 29 vorliegend in die Wanne 5 eingesetzt. Hierdurch ist das zweite magnetische Element 29 beim Aufsetzen oder Abnehmen der Haube 1 auf die und von der Wanne 5 nicht im Bereich von gegeneinander bewegten Bauteilen angeordnet und läuft somit nicht Gefahr, beschädigt oder aus seiner Aufnahme herausgedrückt zu werden.

Das zweite magnetische Element 29 ist im vorliegenden Fall ein Permanentmagnet, während das erste magnetische Element 28 aus ferromagnetischem Material besteht, so dass sich zwischen den beiden magnetischen Elementen 28, 29 ein Magnetfeld ausbildet, das die beiden magnetischen Elemente 28, 29 gegenseitig anzieht. Die Schwingtüre 8 wird somit in der dargestellten Stellung vom Magnetfeld gehalten, und wenn die Schwingtüre 8 nach dem Öffnen aufgrund der Schwerkraft durchschwingt, wird sie vom Magnetfeld eingefangen und in die dargestellte Position verbracht.

Beide magnetischen Elemente 28, 29 sind jeweils in eine angeformte Aufnahme eingedrückt, wo sie dauerelastisch gehalten werden.

Figur 7 zeigt die Aufnahme 32 für das erste magnetische Element 28 im unteren Rand 30 der Schwingtüre 8 im Detail. Hierbei wird verdeutlicht, dass die Aufnahme 32 kronenförmig ausgestaltet ist und elastisch verformbare, als Rastelemente dienende Finger 33 aufweist, die einerseits das Eindrücken des ersten magnetischen Elements 28 erleichtern und andererseits das magnetische Element 28 dauerhaft an Ort und Stelle halten.

Wie die Figuren 4 und 5 außerdem verdeutlichen, ist die Schwingtüre 8 mit einer Gewichtsverteilung versehen, und zwar durch einen asymmetrischen, ungleich breiten Rand, sodass sie, schon alleine aufgrund der Schwerkraft der leichten Konizität der Stirnseite 6 der Haube 1 folgend, in Ruhe so an den Drehlagern 24 hängt, dass die Zugangsöffnung 7 wie in Figur 6 dargestellt, möglichst exakt verschlossen ist. Die magnetischen Elemente 28, 29 dienen zur Optimierung und halten die Schwingtüre 8 an Ort und Stelle, so dass sie nur mit Überwindung einer (leichten) Haltekraft geöffnet werden kann.

Figur 9 zeigt den Aufbau des Filterhalters 11. Dieser besteht im Wesentlichen aus einem Rahmen 34 mit Haltekrallen 35, deren Außenseiten mit Rastelementen 36 zum Einclipsen in die Entlüftungsöffnung 10 versehen sind. Der Rahmen 34 begrenzt ein Gitter 37, das die vom Rahmen 34 umschriebene Fläche überdeckt. An der Unterseite ist an dem Rahmen 34 eine Griffleiste 38 angeformt, mit der der Filterhalter 11 aus der Entlüftungsöffnung 10 herausgezogen werden kann.

Figur 10 verdeutlicht, wie das Filtervlies 15 in den Filterhalter 11 eingesetzt und dort von den Haltekrallen 35 gesichert wird. Das Filtervlies 15 besteht vorliegend zu einem Großteil aus Aktivkohle, um unerwünschte Gerüche aus der Toilettenbox zu neutralisieren. Wie die Darstellung verdeutlicht, ist das Filtervlies 15 leicht auszuwechseln, wenn die Wirkung der Aktivkohle nachlässt.

### Bezugszeichenliste:

- 1: Haube
- 2: Tragegriff
- 3: Seitenwandung
- 4: Deckplatte
- 5: Wanne
- 6: Stirnseite (von 1)
- 7: Zugangsöffnung
- 8: Schwingtüre
- 9: Oberseite (von 7)
- 10: Entlüftungsöffnung
- 11: Filterhalter
- 12: Stellrand
- 13: Absenkung
- 14: Vordere Stirnseite (von 5)
- 15: Filtervlies
- 16: Schaufel
- 17: Ausnehmung
- 18: Haltestift (zu 17)
- 19: Öffnung (in 16)
- 20: Haltevorsprünge (von 17)

- 21: Grifföffnung
- 22: Stiel
- 23: Scharnierstreben
- 24: Drehlager
- 25: Oberer Rand (von 7)
- 26: Schwenkachse
- 27: Innenraum
- 28: Magnetisches Element (erstes)
- 29: Magnetisches Element (zweites)
- 30: Unterer Rand (von 8)
- 31: Randbereich (von 7)
- 32: Aufnahme
- 33: Finger
- 34: Rahmen
- 35: Haltekrallen
- 36: Rastelemente
- 37: Gitter
- 38: Griffleiste
- 39: Aufliegerahmen

## Patentansprüche

1. Toilettenbox für Kleintiere, insbesondere Katzen, mit einer Wanne (5) und einer auf die Wanne (5) aufsetzbaren Haube (1), die zusammen mit der Wanne (5) einen Innenraum (27) einschließt, mit einer Zugangsöffnung (7) zum Innenraum (27) in einer Seitenwandung (3) der Haube (1) und mit einer Schwingtüre (8) [Pendeltür] zum Abdecken oder Verschließen der Zugangsöffnung (7), die mittels Scharnierelementen schwenkbar im Bereich eines oberen Randes einer Oberseite (9) der Zugangsöffnung (7) angebracht ist und um eine im Wesentlichen horizontal verlaufende Schwenkachse (26) nach innen zum Innenraum (27) und nach außen schwingen kann, wobei sowohl die Wanne (5) als auch die Haube (1) aus spritzgegossenem Kunststoff gefertigt sind,
**dadurch gekennzeichnet,**
**dass** in einem von der Schwenkachse (26) beabstandeten Bereich der Schwingtüre (8) mindestens ein erstes magnetisches Element (28) an der Schwingtüre (8) befestigt und/oder in diese integriert ist, während an der Haube (1) und/oder an der Wanne (5), in einem Randbereich um die Zugangsöffnung (7), mindestens ein zweites magnetisches Element (29) so angeordnet ist, dass die ersten und zweiten magnetischen Elemente (28, 29) über ein magnetisches Feld miteinander wechselwirken und sich hierbei gegenseitig anziehen.

2. Toilettenbox nach Anspruch 1,
**dadurch gekennzeichnet,**
**dass** mindestens eines der ersten und zweiten magnetischen Elemente (28, 29) aus mindestens einem Permanentmagneten gebildet ist, während die magnetischen Elemente (28, 29), die keine Permanentmagnete sind, aus ferromagnetischem, ferrimagnetischem und/oder diamagnetischem Material bestehen.

3. Toilettenbox nach einem der Ansprüche 1 oder 2,
**dadurch gekennzeichnet,**
**dass** das mindestens eine erste magnetische Element (28) an einem Rand, vorzugsweise einem unteren Rand der Schwingtüre (8) oder in der Nähe desselben angeordnet ist, während das mindestens eine zweite magnetische Element (29) im Randbereich (31) um die Zugangsöffnung (7) so angeordnet ist, dass sich die ersten und zweiten magnetischen Elemente (28, 29) beim Durchschwingen der Schwingtüre (8) in etwa gegenüberliegen.

4. Toilettenbox nach mindestens einem der Ansprüche 1 bis 3,
**dadurch gekennzeichnet,**
**dass** die magnetischen Elemente (28, 29) zumindest in der Haube (1) in angeformte Aufnahmen (32) mit elastischen Rastelementen (36) eingedrückt sind.

5. Toilettenbox nach Anspruch 4,
**dadurch gekennzeichnet,**
**dass** die Aufnahmen (32) kronenförmig mit elastisch verformbaren, als Rastelemente (36) dienenden Zacken oder Fingern ausgestaltet sind.

6. Toilettenbox nach mindestens einem der Ansprüche 1 bis 5,
**dadurch gekennzeichnet,**
**dass** die Schwingtüre (8) mit einer Gewichtsverteilung, insbesondere einer solcherart variierenden Materialverteilung gefertigt ist, dass sie aufgrund der Lage ihres Schwerpunkts in Bezug auf die Schwenkachse (26) unter alleinigem Einfluss der Schwerkraft eine Position einnimmt, in der ihr Rand dem Randbereich (31) der Haube (1) umlaufend gegenüberliegt.

7. Toilettenbox nach mindestens einem der Ansprüche 1 bis 6,
**dadurch gekennzeichnet,**
**dass** die Wanne (5) mit einem außen umlaufenden Stellrand (12) versehen ist.

8. Toilettenbox nach Anspruch 7,
**dadurch gekennzeichnet,**
**dass** die Haube (1) vollständig, oder mit Ausnahme des Stellrandes (12) nahezu vollständig über die Wanne (5) überstülpbar ist.

9. Toilettenbox nach mindestens einem der Ansprüche 1 bis 8,
**dadurch gekennzeichnet,**
**dass** die Wanne (5) an einer vorderen Stirnseite eine Absenkung (13) als Teil der Zugangsöffnung (7) aufweist.

10. Toilettenbox nach mindestens einem der Ansprüche 1 bis 9,
**dadurch gekennzeichnet,**
**dass** die Wanne (5) an einer hinteren Stirnseite mit einer Ausnehmung (17) zur formschlüssigen Aufnahme einer Schaufel (16) für Katzenstreu und dergleichen versehen ist, wobei die Ausnehmung (17) vorzugsweise ein Haltestift (18) zum Einrasten der Schaufel (16) aufweist, und wobei die Schaufel (16) mit ihren Stiel (22) nach oben über die Wanne (5) überstehend in der Ausnehmung (17) gehalten ist.

11. Toilettenbox nach mindestens einem der Ansprüche 1 bis 10,
**dadurch gekennzeichnet,**
**dass** die Haube (1), vorzugsweise in ihrer der Zugangsöffnung (7) gegenüberliegenden Seitenwandung, mit einer Entlüftungsöffnung (10) versehen ist, in die ein Filterhalter (11) mit einem wechselbaren Filtervlies (15), vorzugsweise aus oder mit Aktivkohle, lösbar eingeklipst ist.

12. Toilettenbox nach Anspruch 11,
**dadurch gekennzeichnet,**
**dass** der Filterhalter (11) im Wesentlichen aus einem Rahmen mit Rastelementen (36) zum Einklipsen in die Entlüftungsöffnung (10), einem vom Rahmen begrenzten Gitter (37) und Haltekrallen (35) für das wechselbare Filtervlies (15) besteht, wobei die Haltekrallen (35) vorzugsweise gleichzeitig die Rastelemente (36) zum Einklipsen bilden.

13. Toilettenbox nach mindestens einem der Ansprüche 1 bis 12,
**dadurch gekennzeichnet,**
**dass** die Haube (1) oben offen ist und mit einem Aufliegerahmen (39) und/oder mit Aufliegevorsprüngen versehen ist, auf dem oder auf denen eine auswechselbare Deckplatte (3) liegt oder befestigt, vorzugsweise lösbar befestigt ist.

14. Toilettenbox nach mindestens einem der Ansprüche 1 bis 13,
**dadurch gekennzeichnet,**
**dass** die Schwenkachse (26) der Schwingtüre (8) oberhalb eines oberen Randes der Zugangsöffnung (7) und zum Innenraum (27) hin von der Seitenwandung (3) der Haube (1) beabstandet verläuft, wobei die Scharnierelemente aus mindestens zwei an die Seitenwandung (3) der Haube (1) angeformten Drehlagern (24) und mindestens zwei an die Schwingtüre (8) angeformten und in den Drehlagern (24) schwenkbar gelagerten, vom Drehlager (24) bis zur Schwingtüre (8) C-förmig verlaufenden Scharnierstreben (23) gebildet sind.
